# EUROPEAN PATENT APPLICATION

(11) **EP 4 142 332 A1**
(43) Date of publication of application: **01.03.2023**
(21) Application number: 20932226.2
(22) Date of filing: 21.04.2020
(51) Int. Cl.: H04W 16/04

(54) **TERMINAL AND COMMUNICATION METHOD**

(71) Applicant: NTT DOCOMO, INC., Chiyoda-Ku Tokyo 100-6150 (JP)
(72) Inventor: TAKEDA, Daiki, Tokyo 100-6150 (JP); HARADA, Hiroki, Tokyo 100-6150 (JP); KUMAGAI, Shinya, Tokyo 100-6150 (JP)
(74) Representative: Hoffmann Eitle
(86) International application number: PCT/JP2020/017265
(87) International publication number: WO 2021/214893

(57) **Abstract**

A terminal includes a receiver configured to receive signaling for allocating a resource in a first system, from a base station, a control unit configured to identify an invalid resource or a valid resource in a second system, based on the signaling, and a communication unit configured to perform communication in a second system.

## Description

### Field of the Invention

The present invention relates to a terminal and a communication method in a wireless communication system.

### Related Art

In New Radio (NR, also called "5G"), which is the successor system to LTE (Long Term Evolution), technologies have been discussed that will satisfy requirements including high capacity systems, high speed data transmission, low latency, simultaneous connection of a large number of terminals, low cost, power savings, and the like (for example, Non-Patent Document 1).

In the future, NR-based IoT (Internet of Things) will be supported. The NR-based IoT may be referred to as NR-BL (bandwidth reduced low complexity) -UE (user equipment). NR-BL-UE is expected to coexist with other systems such as Release 15 NR, LTE, LTE-eMTC (enhanced Machine Type Communication), LTE-NB (Narrowband) -IOT (for example, Non-Patent Document 2), or RAT (Radio Access Technology).

### RELATED-ART DOCUMENTS

### Non-Patent Document

Non-Patent Document 1: 3GPP TS 38.300 V15.8.0 (2019-12)
Non-Patent Document 2: 3GPP TS 36.211 V15.8.1 (2020-01)

### SUMMARY OF THE INVENTION

### Problem to be solved by the Invention

In a case where NR-based IoT is supported, a resource reservation mechanism is introduced to allow each system or RAT to coexist. For example, a resource reservation mechanism of LTE-eMTC or LTE-NB-IoT is supported for avoiding resource conflicts with LTE and NR. Furthermore, a resource reservation mechanism of NR is supported for avoiding resource conflicts with LTE-eMTC and LTE-NB-IoT. However, for example, the details of the resource reservation mechanism of NR-based IoT for avoiding resource conflicts with NR, is unknown.

The present invention has been made in view of the above points and, in the wireless communication system, conflicts between systems over resources to be used can be avoided .

### Means for solving the problem

The technology of the present invention provides a terminal including a receiver configured to receive signaling for allocating a resource in a first system, from a base station, a control unit configured to identify an invalid resource or a valid resource in a second system, based on the signaling, and a communication unit configured to perform communication in a second system.

### Effect of the Invention

According to the technology of the present invention, in the wireless communication system, conflicts between systems over resources to be used can be avoided.

### BRIEF DESCRIPTION OF THE DRAWINGS

Fig. 1 is a diagram illustrating a configuration example of a wireless communication system according to an embodiment of the present invention;
Fig. 2 is a diagram illustrating an example of resource arrangement;
Fig. 3 is a diagram illustrating an example (1) of arranging resources in an embodiment of the present invention;
Fig. 4 is a flowchart illustrating an example (1) of indicating resources in an embodiment of the present invention;
Fig. 5 is a diagram illustrating an example (2) of arranging resources in an embodiment of the present invention;
Fig. 6 is a flowchart illustrating an example (2) of indicating resources in an embodiment of the present invention;
Fig. 7 is a diagram illustrating an example of a functional configuration of a base station 10 according to an embodiment of the present invention;
Fig. 8 is a diagram illustrating an example of a functional configuration of a terminal 20 according to an embodiment of the present invention; and
Fig. 9 is a diagram illustrating an example of a hardware configuration of a base station 10 or a terminal 20 according to an embodiment of the present invention.

### DESCRIPTION OF THE PREFERRED EMBODIMENTS

Hereafter, embodiments of the present invention will be described with reference to the appended drawings. Embodiments to be described below are an example, and embodiments to which the present invention is applied are not limited to the following embodiments.

The conventional technologies will be accordingly used for an operation of a wireless communication system of an embodiment of the present invention. In this regard, the conventional technologies include, for example, the conventional LTE but is not limited to the conventional LTE. The term "LTE" used in this specification has a broad meaning including LTE-Advanced and schemes after LTE-Advanced (for example, NR) unless otherwise specified.

In the embodiments described below, the terms "SS (Synchronization Signal)," "PSS (Primary SS)," "SSS (Secondary SS)," "PBCH (Physical Broadcast Channel)," "PRACH (Physical Random Access Channel)," "PDCCH (Physical Downlink Control Channel)," "PDSCH (Physical Downlink Shared Channel)," "PUCCH (Physical Uplink Control Channel)," "PUSCH (Physical Uplink Shared Channel)," and the like used in existing LTE are used. This is for convenience of description, and signals, functions, and the like on similar to the above-described terms may be called as other terms. The above-described terms in NR correspond to NR-SS, NR-PSS, NR-SSS, NR-PBCH, NR-PRACH, and the like. However, signals used for NR are not necessarily specified as "NR-."

Furthermore, in an embodiment of the present invention, the duplex scheme may be a TDD (Time Division Duplex) scheme, an FDD (Frequency Division Duplex) scheme, or another scheme (for example, Flexible Duplex, and the like).

Furthermore, in an embodiment of the present invention, when a radio parameter or the like is "configured," it may mean that a predetermined value is preconfigured or may mean that a radio parameter notified from the base station 10 or the terminal 20 may be configured.

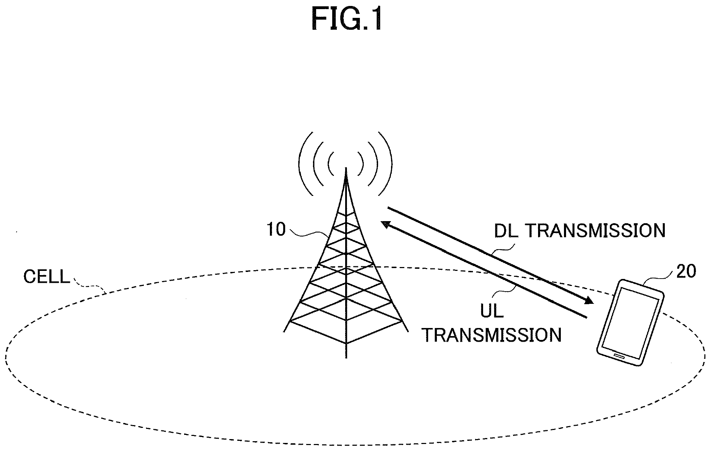

Fig. 1 is a diagram illustrating a configuration example of a wireless communication system according to an embodiment of the present invention. A wireless communication system according to the embodiment of the present invention includes a base station 10 and a terminal 20 as shown in Fig. 1. Although Fig. 1 illustrates one base station 10 and one terminal 20, this is an example, and there may be a plurality of base stations 10 and terminals 20.

The base station 10 is a communication device that provides one or more cells and performs wireless communication with the terminal 20. The physical resources of the radio signal are defined in a time domain and a frequency domain, the time domain may be defined by OFDM (Orthogonal Frequency Division Multiplexing) symbols, and the frequency domain may be defined by sub-carriers or resource blocks. The base station 10 transmits synchronization signals and system information to the terminal 20. The synchronization signals are, for example, NR-PSS and NR-SSS. System information is transmitted, for example, by NR-PBCH, also called broadcast information. The synchronization signals and system information may be referred as SSB (SS/PBCH block). As shown in Fig. 1, the base station 10 transmits a control signal or data in DL (Downlink) to the terminal 20 and receives a control signal or data in UL (Uplink) from the terminal 20. Both the base station device 10 and the terminal 20 are capable of beam forming to transmit and receive signals. Furthermore, both the base station 10 and the terminal 20 can apply MIMO (Multiple Input Multiple Output) communication to the DL or UL. Both the base station 10 and the terminal 20 may also perform communication by CA (Carrier Aggregation) via SCell (Secondary Cell) and PCell (Primary Cell). Furthermore, the terminal 20 may perform communication by DC (Dual Connectivity) via the primary cell of the base station 10 and the PSCell (Primary Secondary Cell) of another base station 10.

The terminal 20 is a communication device having a wireless communication function such as a smartphone, a cellular phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. Furthermore, the terminal 20 receives various reference signals transmitted from the base station 10 and executes the measurement of the propagation path quality based on the reception result of the reference signals.

In 3GPP Release 15 and Release 16, high-end devices are primarily targeted by NR. On the other hand, in Release 17, NR-based IoT devices (hereinafter, also referred to as "NR-IoT") are being discussed as NR devices with reduced complexity. For example, NR-IoT may have the characteristics shown in 1) - 5) below.
1) Reduced number of UE RX/TX antennas
2) Reduced UE Bandwidth
3) Half-duplex communication related to frequency division duplex (Half-Duplex-FDD)
4) Relaxed UE processing time
5) Relaxed UE processing capability

In Release 17 and thereafter, discussions have been made to further reduce the complexity of NR devices. For example, it is being discussed to reuse at least NR SSB as in LTE-eMTC that uses LTE synchronization signals and the like. However, in a case where further reduction in complexity is to be achieved, all channels and signals need to be redesigned as in LTE-NB-IoT. Hereinafter, the initial access procedure for NR-BL (bandwidth reduced low complexity) -UE (user equipment) with reduced complexity will be discussed. Hereinafter, NR-BL-UE and NR-IoT may be replaceable.

Conventionally, the LTE had a similar discussion about BL devices. For example, the bandwidth of eMTC-UE was limited to 6 PRB (Physical resource block). Because SS/MIB (Master information block) was transmitted via 6 PRB at the center frequency position of the LTE carrier, the eMTC-UE was able to reuse the SS/MIB. SIB1-BR is system information defined only for BL-UE, and scheduling information of SIB1-BR is indicated by MIB.

Furthermore, reduction of bandwidth and reduction of the number of antennas were supported in eMTC. For example, by reducing the number of reception antennas, the coverage performance of eMTC-UE is lowered. Therefore, MPDCCH/PDSCH, which performs repeated transmission, is supported as a coverage enhancement. Furthermore, the coverage enhancement is also applied to PDCCH/PDSCH for transmitting/receiving SIB1-BR, and the resource configuration and repetition level of PDCCH can be configured by MIB.

Considering the existing LTE-based IoT devices, the reduction of the bandwidth and the reduction of the number of transmission/reception antennas are also essential elements in the NR-IoT device. On the other hand, when bandwidth is reduced, some channels or signals may need to be changed. Furthermore, for example, when reducing the complexity by providing a single reception antenna, support for coverage enhancement may be required for some channels or signals as required with eMTC. In this regard, NR-BL-UE is required to support a bandwidth of 20 PRB or more when using an existing SSB.

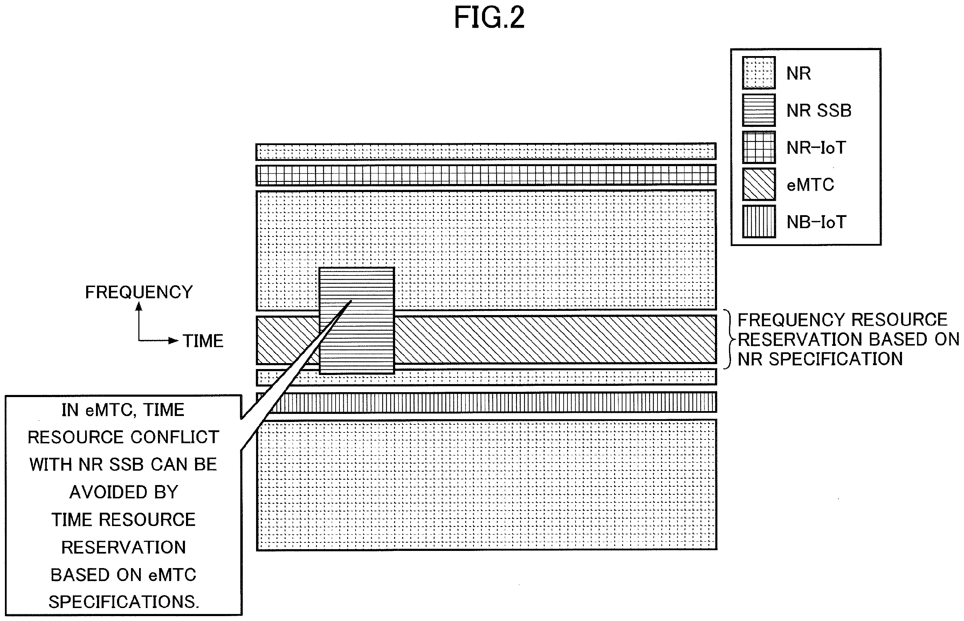

Fig. 2 is a diagram illustrating an example of resource arrangement. When NR-IoT is supported, for example, resources may be allocated to each system or RAT (for example, NR, eMTC, NB-IoT) as shown in Fig. 2. A resource reservation mechanism may be supported in each system or RAT to achieve efficient coexistence. For example, as shown in Fig. 2, for resources where NR-SSB and eMTC are overlapped with each other, resource reservation in the time domain may be made by the eMTC side in order to avoid conflict. That is, the eMTC-UE does not have to use the resources occupied by NR-SSB. Furthermore, the frequency domain occupied by eMTC may be reserved according to the NR specifications. Each system or RAT may be collectively referred to as a system.

In a case where NR-based IoT is supported, a resource reservation mechanism is introduced to allow each system or RAT to coexist. For example, the resource reservation mechanism of LTE-eMTC or LTE-NB-IoT is supported for avoiding resource conflicts with LTE and NR. Furthermore, the resource reservation mechanism of NR is supported for avoiding resource conflicts with LTE-eMTC and LTE-NB-IoT. However, for example, the details of the resource reservation mechanism of NR-based IoT for avoiding resource conflicts with NR, is unknown.

Accordingly, the resource reservation mechanism of NR-based IoT for avoiding resource conflicts with NR will be described below. Furthermore, NR-based IoT is also referred to as NR-IoT or NR-BL-UE.

The resource reservation mechanism for NR-BL-UE may be based on NR signaling for resource reservation or for resource allocation. It should be noted that a part of signaling for NR-non BL-UE may be assumed to be transmitted to NR-BL-UE.

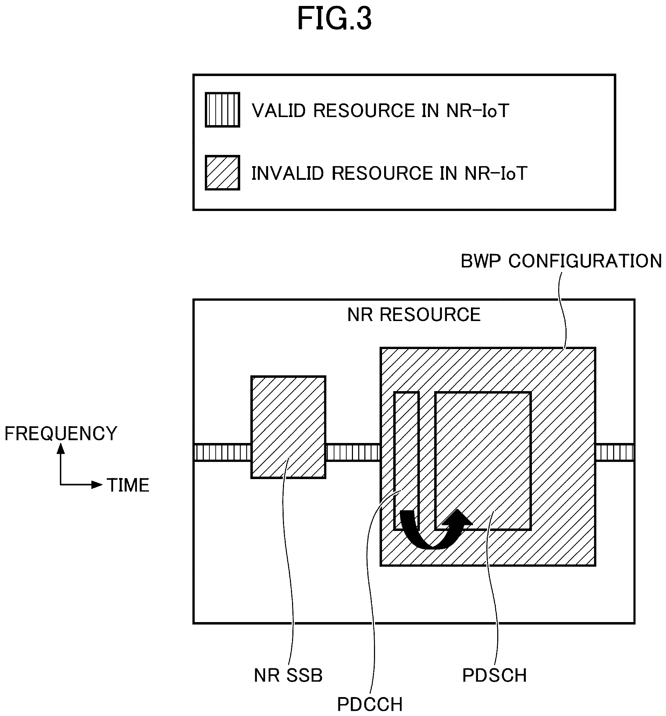

Fig. 3 is a diagram illustrating an example (1) of arranging resources in an embodiment of the present invention. The NR-BL-UE may interpret the resource allocated to the NR-non BL-UE as an invalid resource in NR-IoT. Furthermore, as shown in Fig. 3, the valid resources in NR-IoT may be relatively smaller than the resources allocated to the NR-non BL-UE in the frequency domain.

As an example of resource allocation, as shown in Fig. 3, the resource specified by the BWP configuration may be interpreted by the terminal 20 as an invalid resource in NR-IoT. The BWP configuration may be configured by RRC (Radio Resource Control) signaling. Switching, validating, invalidating, or the like of BWP may be executed by DCI (Downlink Control Information).

Furthermore, as an example of resource allocation, an essential signal for a system, such as NR-SSB shown in Fig. 3, may be interpreted as an invalid resource that is always reserved in NR-IoT. Furthermore, the terminal 20 may assume that the invalid resource is periodic, and may assume that the cycle of the invalid resource is the same cycle as the cycle of the resource used for SSB.

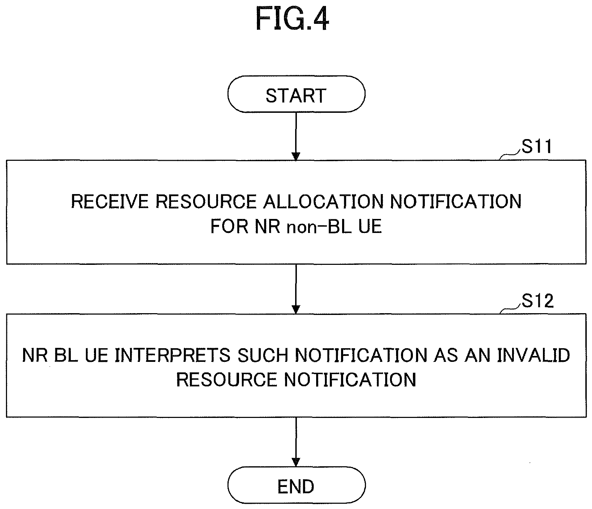

Fig. 4 is a flowchart illustrating an example (1) of indicating resources in an embodiment of the present invention. An example is shown in which the resource is indicated to the terminal 20 operating as NR-IoT. In step S11, the terminal 20 receives the resource allocation notification for NR-non BL-UE. Subsequently, the terminal 20 interprets the notification as an invalid resource notification in NR-BL-UE (S12), and identifies an invalid resource in NR-IoT as shown in Fig. 3. Furthermore, the terminal 20 may execute communication using valid resources in NR-IoT excluding the identified invalid resources.

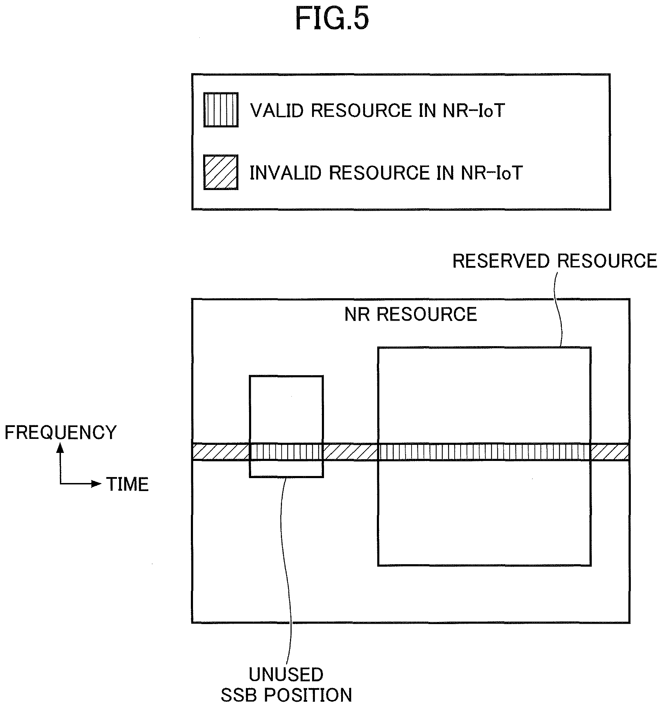

Fig. 5 is a diagram illustrating an example (2) of arranging resources in an embodiment of the present invention. The NR-BL-UE may interpret the resource allocated to the NR-non BL-UE as an invalid resource in NR-IoT. Furthermore, as shown in Fig. 5, the valid resources in NR-IoT may be relatively smaller than the resources allocated to the NR-non BL-UE in the frequency domain, and resources not allocated to NR-non BL-UE may be interpreted as an invalid resource in NR-IoT.

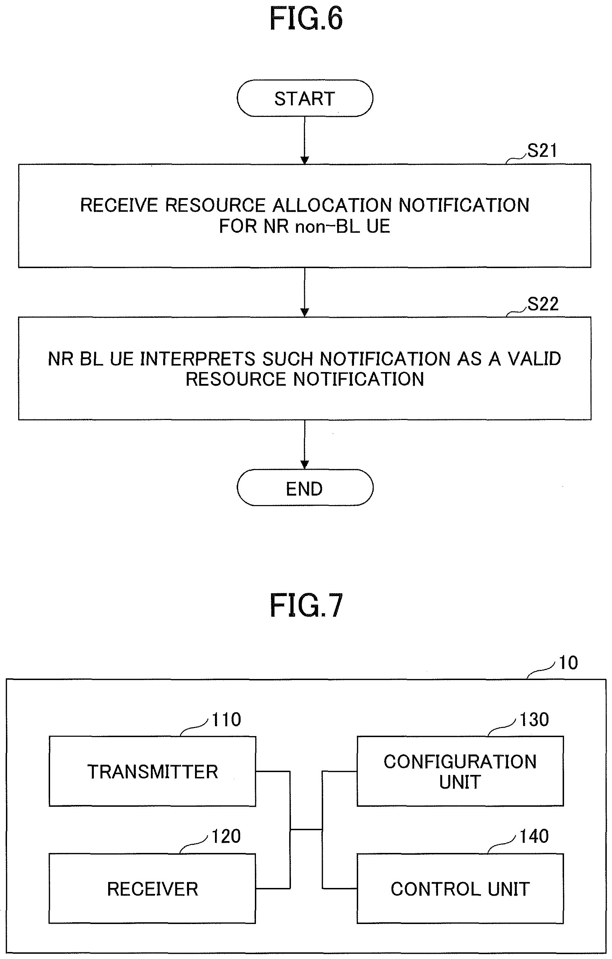

Fig. 6 is a flowchart illustrating an example (2) of indicating resources in an embodiment of the present invention. An example is shown in which the resource is indicated to the terminal 20 operating as NR-IoT. In step S21, the terminal 20 receives the resource allocation notification for NR-non BL-UE. Subsequently, the terminal 20 interprets the notification as a valid resource notification in NR-BL-UE (S22), and identifies an invalid resource in NR-IoT as shown in Fig. 5. Furthermore, the terminal 20 may identify resources for NR-IoT other than the specified valid resources as invalid resources. The terminal 20 may execute communication using the specified valid resources.

In the example of identifying valid or invalid resources in NR-IoT described above, the time domain may be identified, the frequency domain may be identified, and the time domain and frequency domain may be identified.

As another example, NR-BL-UE may combine the case where the resources allocated to NR-non BL-UE are interpreted as invalid resources in NR-IoT and the case where the resources allocated to NR-non BL-UE are interpreted as valid resources in NR-IoT. For example, depending on RRC signaling, MAC signaling, DCI, or predetermined conditions, the switching may be performed between the case where the resources allocated to NR-non BL-UE are interpreted as valid resources in NR-IoT and the case where the resources allocated to NR-non BL-UE are interpreted as invalid resources in NR-IoT.

The operation of NR-BL-UE interpreting the resources allocated to NR-non BL-UE as invalid resources in NR-IoT may be executed to avoid the periodically allocated resources such as SPS (Semi persistent scheduling) in LTE or configured grant in NR. Furthermore, the terminal 20 may assume that the invalid resources are periodic, and may assume that the cycle of the invalid resources is the same cycle as the cycle of the resource allocation by SPS.

Furthermore, the operation of NR-BL-UE interpreting the resources allocated to NR-non BL-UE as invalid resources in NR-IoT may be executed to avoid long-term transmissions, such as repeated transmission in eMTC/NB-IoT.

Furthermore, the operation of NR-BL-UE interpreting the resources allocated to NR-non BL-UE as invalid resources in NR-IoT may be executed to avoid individual user data or control channel resources or may be executed to avoid multicast transmission, such as MBMS (Multimedia Broadcast Multicast Service).

It is noted that the resource allocation notification to NR-non BL-UE is not required to be the information actually indicated to terminal 20, and the resources to be reserved based on the information fixed in the specification may be considered as resource allocation notification.

In the previously described embodiment, the signaling from the base station 10 to the terminal 20 or from the terminal 20 to the base station 10 is not limited to an explicit method, and may be indicated by an implicit method. Furthermore, the signaling need not be performed, and may be uniquely specified in the specifications.

In the previously described embodiment, the signaling from the base station 10 to the terminal 20 or from the terminal 20 to the base station 10 may be different layers of signaling such as RRC signaling, MAC-CE signaling, or DCI signaling and may be a signaling by broadcast information (MIB (Master Information Block), SIB (System Information Block)). Furthermore, for example, RRC signaling and DCI signaling may be combined, RRC signaling and MAC-CE signaling may be combined, or RRC signaling, MAC-CE signaling, and DCI signaling may be combined.

According to the previously described embodiment, the terminal 20 can identify invalid resources or valid resources in NR-BL-UE or NR-IoT, based on the signaling for NR-non BL-UE.

In other words, in the wireless communication system, conflicts between systems over resources to be used can be avoided.

### (Apparatus configuration)

Next, a functional configuration example of a base station 10 and a terminal 20 that execute processes and operations described previously will be described. The base station 10 and the terminal 20 include a function of performing the previously described embodiment. However, the base station 10 and the terminal 20 may each include only a part of the functions in the embodiment.

### <Base station 10>

Fig. 7 is a diagram illustrating an example of a functional configuration of the base station 10 according to an embodiment of the present invention. As shown in Fig. 7, the base station 10 includes a transmitter 110, a receiver 120, a configuration unit 130, and a control unit 140. The functional configuration shown in Fig. 7 is only one example. As long as the operation according to the embodiments of the present invention can be performed, the functional category and the name of the functional unit may be any one.

The transmitter 110 includes a function for generating a signal to be transmitted to the terminal 20 side and transmitting the signal wirelessly. Furthermore, the transmitter 110 transmits a message between network nodes to another network node. The receiver 120 includes a function for receiving various signals transmitted from the terminal 20 and acquiring, for example, information of a higher layer from the received signals. The transmitter 110 includes a function to transmit NR-PSS, NR-SSS, NR-PBCH, DL/UL control signals, and the like to the terminal 20. Furthermore, the receiver 120 receives a message between network nodes from another network node.

The configuration unit 130 stores the preset setting information and various setting information to be transmitted to the terminal 20. The contents of the setting information are, for example, information related to the setting of NR-IoT.

As described in the embodiment, the control unit 140 performs control related to the configuration of NR-IoT. Furthermore, the control unit 140 controls the communication by NR-IoT. A function unit related to signal transmission in the control unit 140 may be included in the transmitter 110, and a function unit related to signal reception in the control unit 140 may be included in the receiver 120.

### <Terminal 20>

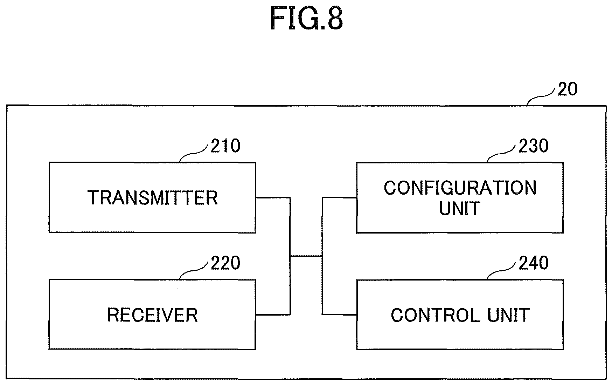

Fig. 8 is a diagram illustrating an example of the functional configuration of the terminal 20. As shown in FIG. 8, the terminal 20 includes a transmitter 210, a receiver 220, a configuration unit 230, and a control unit 240. The functional configuration shown in Fig. 8 is only one example. As long as the operation according to the embodiments of the present invention can be performed, the functional category and the name of the functional unit may be any one.

The transmitter 210 generates a transmission signal from the transmission data and wirelessly transmits the transmission signal. The receiver 220 receives various signals wirelessly and acquires signals from higher layers from the received signal of the physical layer. The receiver 220 has a function to receive the NR-PSS, NR-SSS, NR-PBCH, the DL/UL/SL control signal, or the reference signal transmitted from the base station 10. For example, the transmitter 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20 as D2D communication, and the receiver 220 receives PSCCH, PSSCH, PSDCH, PSBCH, or the like from another terminal 20.

The configuration unit 230 stores various setting information received from the base station 10 by the receiver 220. The configuration unit 230 also stores the preset setting information. The contents of the setting information are, for example, information related to the setting of NR-IoT.

As described in the embodiment, the control unit 240 performs processing related to the setting of NR-IoT. Furthermore, the control unit 240 controls the communication by NR-IoT. A function unit related to signal transmission in the control unit 240 may be included in the transmitter 210, and a function unit related to signal reception in the control unit 240 may be included in the receiver 220.

### (Hardware configuration)

In the block diagrams (Fig. 7 and Fig. 8) used to describe the embodiment, the blocks of the functional units are illustrated. The functional blocks (configuring parts) are implemented by an arbitrary combination of hardware and software. In addition, the implementation method of each function block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The function block may be implemented by combining software with one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring part) that causes the transmission to function is referred to as a transmitting unit or a transmitter. In any case, as described above, an implementation method is not particularly limited.

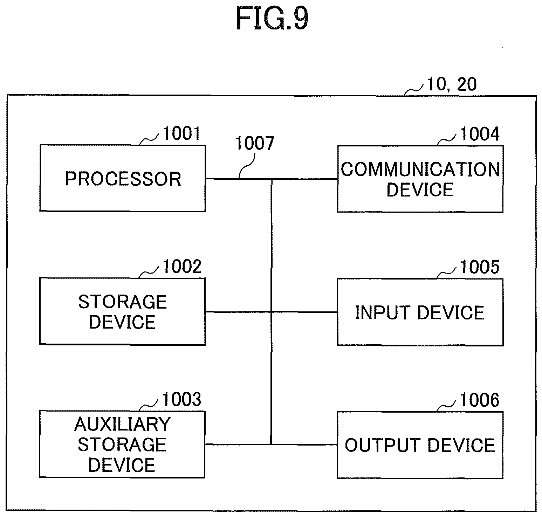

For example, the base station 10, the terminal 20, or the like in one embodiment of the present invention may function as a computer for processing wireless communication method of the present invention. Fig. 9 is a diagram illustrating an example of a hardware configuration of the base station 10 and the terminal 20 according to an embodiment of the present invention. Each of the base station 10 and the terminal 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station 10 and the terminal 20 may be configured to include one or more devices illustrated in the drawing or may be configured without including some devices.

Each function in the base station 10 and the terminal 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the controller 140, the controller 240, and the like described above may be implemented by the processor 1001.

Furthermore, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station 10 illustrated in Fig. 12 may be implemented by a control program which is stored in the storage device 1002 and operates on the processor 1001. Furthermore, for example, the control unit 240 of the terminal 20 illustrated in Fig. 8 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer-readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present invention.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage medium may be, for example, a database, a server, or any other appropriate medium including at least one of the storage device 1002 and the auxiliary storage device 1003.

The communication device 1004 is hardware (a transceiving device) for performing communication between computers via at least one of a wired network and a wireless network, and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplexing (FDD) and time division duplexing (TDD). For example, a transceiving antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the storage device 1002 are connected via the bus 1007 to communicate information with each other. The bus 1007 may be configured with a single bus or may be configured with different buses between the devices.

Furthermore, each of the base station 10 and the terminal 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Summary of embodiments)

As previously described, according to the embodiment of the present invention, a terminal including a receiver configured to receive signaling for allocating a resource in a first system, from a base station, a control unit configured to identify an invalid resource or a valid resource in a second system, based on the signaling, and a communication unit configured to perform communication in a second system is provided.

According to the previously described configuration, the terminal 20 can identify invalid resources or valid resources in NR-BL-UE or NR-IoT, based on the signaling for NR-non BL-UE. In other words, in the wireless communication system, conflicts between systems over resources to be used can be avoided.

The control unit may identify valid resources in the first system as invalid resources in the second system, or may identify invalid resources in the first system as valid resources in the second system. According to the above configuration, the terminal 20 can identify invalid resources or valid resources in NR-BL-UE or NR-IoT.

The second system may use resources with a narrower frequency domain than the first system, and the invalid resources or the valid resources may be identified by a time domain, by a frequency domain, or by a time domain and a frequency domain. According to the above configuration, the terminal 20 can identify invalid resources or valid resources in NR-BL-UE or NR-IoT.

In a case where the signaling indicates periodic resource allocation, the control unit may identify the periodic resource as an invalid resource in the second system. According to the above configuration, the terminal 20 can avoid periodic resources to be used by other systems, as invalid resources.

In a case where the signaling indicates resource allocation for repeated transmission, the control unit may identify the resource for repeated transmission as an invalid resource in the second system. According to the above configuration, the terminal 20 can avoid resources for repeated transmission to be used by other systems, as invalid resources.

In a case where the signaling indicates resource allocation for multicast transmission, the control unit may identify the resource for multicast transmission as an invalid resource in the second system. According to the above configuration, the terminal 20 can avoid resources for multicast transmission to be used by other systems, as invalid resources.

Furthermore, according to the embodiment of the present invention, a communication method executed by a terminal including receiving a signaling for allocating resources in a first system, from a base station, identifying invalid resources or valid resources in a second system, based on the signaling, and performing communication in a second system is provided.

According to the previously described configuration, the terminal 20 can identify invalid resources or valid resources in NR-BL-UE or NR-IoT, based on the signaling for NR-non BL-UE. In other words, in the wireless communication system, conflicts between systems over resources to be used can be avoided.

### (Supplement to embodiments)

The exemplary embodiment of the present invention has been described above, but the present invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention, matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 10 and the terminal 20 have been described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present invention and may be given by any other method. For example, the notification of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB))), other signals, or a combination thereof. Furthermore, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, a next generation systems extended on the basis of these standards, or the like. Furthermore, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present invention presents elements of various steps using an exemplary order and is not limited to a presented specific order.

In this specification, a specific operation that is supposed to be performed by the base station 10 may be performed by an upper node in some cases. In the network including one or more network nodes including the base station 10, various operations performed for communication with the terminal 20 can be obviously performed by at least one of the base station and any network node (for example, an MME, an S-GW, or the like is considered, but it is not limited thereto) other than the base station 10. The example in which the number of network nodes excluding the base station 10 is one has been described above, but other network nodes in which a plurality of other network nodes (for example, an MME and an S-GW) are combined may be provided.

Information, a signal, or the like described in the present invention may be output from an upper layer (or a lower layer) to a lower layer (or an upper layer). Information, a signal, or the like described in the present invention may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present invention may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when the software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the radio technology is included in a definition of a transmission medium.

Information, signals, and the like described in the present invention may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields, or photons, or an arbitrary combination thereof.

The terms described in the present invention and terms necessary for understanding the present invention may be replaced with terms having the same or similar meanings. For example, at least one of a channel and a symbol may be a signal. Furthermore, a signal may be a message. Furthermore, a component carrier (CC) may be referred to as a carrier frequency, a cell, or the like.

The terms "system" and "network" used in the present invention are used interchangeably.

Furthermore, information, parameters, and the like described in the present invention may be indicated by absolute values, may be indicated by relative values from predetermined values, or may be indicated by corresponding other information. For example, radio resources may be those indicated by an index.

The names used for the above-described parameters are not limited in any respect. Furthermore, mathematical formulas or the like using the parameters may be different from those explicitly disclosed in the present invention. Since various channels (for example, a PUCCH, a PDCCH, and the like) and information elements can be identified by suitable names, various names allocated to the various channels and the information elements are not limited in any respect.

In the present invention, the terms "base station (BS)," "radio base station," "base station apparatus," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present invention, the terms "mobile station (MS)," "user terminal," "user equipment (UE)," "terminal," and the like can be used interchangeably.

The mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned mobile body (for example, a drone, an autonomous vehicle, or the like), or a robot (manned type or unmanned type). At least one of the base station and the mobile station includes a device that does not necessarily move during a communication operation. For example, at least one of the base station and the mobile station may be an Internet of things (IoT) device such as a sensor.

Furthermore, the base station in the present invention may be replaced with a user terminal. For example, each aspect/embodiment of the present invention may be applied to a configuration in which communication between the base station and the user terminal is replaced with communication between a plurality of terminal 20 (for example, which may be referred to as device-to-device (D2D) or vehicle-to-everything (V2X)). In this case, the terminal 20 may have the functions of the base station 10 described above. Furthermore, the terms "uplink" and "downlink" may be replaced with terms corresponding to inter-terminal communication (for example, "side"). For example, an uplink channel, a downlink channel, or the like may be replaced with side channels.

Similarly, the user terminal in the present invention may be replaced with the base station. In this case, the base station may have the functions of the above-mentioned user terminal.

The terms "determining" and "deciding" used in the present invention may include a wide variety of actions. For example, "determining" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding." Furthermore, "determining" and "deciding" may include, for example, events in which events such as receiving (for example, receiving information), transmitting (for example, transmitting information), input, output, or accessing (for example, accessing data in a memory) are regarded as "determining" or "deciding." Furthermore, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding." Furthermore, "determining (deciding)" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present invention, two elements may be considered to be "connected" or "coupled" with each other using at least one of one or more electric wires, cables, and/or a printed electrical connection or using electromagnetic energy having a wavelength in a radio frequency domain, a microwave region, or a light (both visible and invisible) region as nonlimiting and non-exhaustive examples.

A reference signal may be abbreviated as RS and may be referred to as a pilot, depending on a standard to be applied.

The phrase "on the basis of" used in the present invention is not limited to "on the basis of only" unless otherwise stated. In other words, a phrase "on the basis of" means both "on the basis of only" and "on the basis of at least."

Any reference to an element using a designation such as "first," "second," or the like used in the present invention does not generally restrict quantities or order of those elements. Such designations can be used in the present invention as a convenient method of distinguishing two or more elements. Thus, a reference to the first and second elements does not mean that only two elements can be adopted there, or the first element must precede the second element in a certain form.

Furthermore, "means" in the configuration of each of the previously described devices may be replaced with "unit," "circuit," "device," or the like.

In a case in which "include," "including," and variations thereof are used in the present invention, these terms are intended to be comprehensive, similarly to the term "comprising." Furthermore, the term "or" used in the present invention is intended not to be an exclusive-OR.

A radio frame may consist of one or more frames in the time domain. Each of the one or more frames in the time domain may be referred to as a subframe. The subframe may further comprise one or more slots in the time domain. The subframe may have a fixed length of time (e.g., 1 ms) independent of numerology.

The numerology may be a communication parameter that is applied to at least one of the transmission and reception of a signal or channel. The numerology may indicate at least one of, for example, sub-carrier spacing (SCS), bandwidth, symbol length, cyclic prefix length, transmit time interval (TTI), number of symbols per TTI, radio frame configuration, certain filtering processing performed by a transmitting/receiving device in the frequency domain, specific windowing processing performed by a transmitting/receiving device in the time domain, and the like.

The slot may consist of one or more symbols in the time domain (such as OFDM (Orthogonal Frequency Division Multiplexing) symbols, SC-FDMA (Single Carrier Frequency Division Multiple Access) symbols and the like). The slot may be in time units based on numerology.

The slots may include a plurality of minislots. Each minislot may be comprised of one or more symbols in the time domain. The minislot may also be referred to as a subslot. The minislot may consist of fewer symbols than the slots. A PDSCH (or PUSCH) transmitted in time units greater than a minislot may be called a PDSCH (or PUSCH) mapping type A. A PDSCH (or PUSCH) transmitted using minislots may be referred to as PDSCH (or PUSCH) mapping type B.

Radio frames, subframes, slots, minislots and symbols all represent time units for transmitting signals. Radio frames, subframes, slots, minislots and symbols, respectively, may be designated with other corresponding terms.

For example, one subframe may be referred to as a Transmission Time Interval (TTI), multiple consecutive subframes may be referred to as a TTI, and one slot or one minislot may be referred to as a TTI. That is, at least one of the subframes and the TTI may be a subframe (1 ms) in an existing LTE, a period shorter than 1 ms (e.g., 1-13 symbols), or a period longer than 1 ms. The unit representing the TTI may be referred to as a slot, a minislot or the like, rather than a subframe.

The TTI refers, for example, to the minimum time unit for scheduling in radio communication. For example, in an LTE system, a base station schedules each terminal 20 to allocate radio resources (such as frequency bandwidth, transmission power that can be used in each terminal 20) in TTI units. The definition of TTI is not limited thereto.

The TTI may be a transmission time unit, such as a channel-encoded data packet (transport block), code block, codeword, or the like, or may be a unit of processing, such as a scheduling or link adaptation. When a TTI is provided, the time section (e.g., the number of symbols) during which the transport block, code block, codeword, or the like is actually mapped may be shorter than the TTI.

If one slot or one minislot is referred to as a TTI, one or more TTIs (i.e., one or more slots or one or more minislots) may be the minimum time unit for scheduling. The number of slots (minislots) constituting the minimum time unit of the scheduling may also be controlled.

A TTI having a time length of 1 ms may be referred to as an ordinary TTI (usually a TTI in LTE Rel. 8-12), a normal TTI, a long TTI, an ordinary subframe, a normal subframe, a long subframe, a slot and the like. A TTI that is typically shorter than a normal TTI may be referred to as a shortened TTI, a short TTI, a partial TTI (partial or fractional TTI), a shortened subframe, a short subframe, a minislot, a subslot, a slot, or the like.

The long TTI (e.g., normal TTI, subframe, or the like) may be interpreted as a TTI having a time length exceeding 1 ms. The short TTI (e.g., shortened TTI, or the like) may be interpreted as a TTI having a TTI length less than the TTI length of the long TTI and a TTI length equal to or greater than 1 ms.

A resource block (RB) is a resource allocation unit in a time domain and frequency domain, and may include one or more consecutive subcarriers in the frequency domain. The number of subcarriers included in the RB may be the same regardless of the numerology, for example, 12. The number of subcarriers included in the RB may be determined based on numerology.

The time domain of the RB may also include one or more symbols, which may be 1 slot, 1 minislot, 1 subframe, or 1 TTI in length. One TTI, one subframe, or the like may each consist of one or more resource blocks.

Note that one or more RBs may be referred to as physical resource blocks (PRBs: physical RB), sub-carrier groups (SCGs), resource element groups (REGs), PRB pairs, RB pairs and the like.

Resource blocks may also consist of one or more resource elements (RE). For example, 1 RE may be a radio resource area of one sub-carrier and one symbol.

A bandwidth part (BWP) (also referred to as a partial bandwidth or the like) may represent a subset of consecutive common RBs (common resource blocks) for a particular carrier for a certain numerology. It is noted that the common RB may be identified by an RB index relative to the common reference point of the carrier. A PRB may be defined in a BWP and numbered within this BWP.

A BWP may include a BWP for UL (UL BWP) and a BWP for DL (DL BWP). For UE, one or more BWPs may be configured in one carrier.

At least one of the configured BWPs may be active, and the UE need not assume that it will send and receive predetermined signals/channels outside of the active BWP. The terms "cell," "carrier" and the like in this invention may be replaced by "BWP."

The previously described structure of wireless frame, subframe, slot, minislot and symbol is only an example. For example, the number of subframes included in the radio frame, number of slots per subframe or radio frame, number of minislots included in the slot or minislot, number of symbols or RBs included in the slot or minislot, number of subcarriers included in RB, number of symbols in TTI, length of symbol, length of cyclic prefix (CP), and the like may be varied.

In the present invention, if articles are added by translation, for example, a, an, and the in English, the present invention may include plural nouns following these articles.

In the present invention, the term "A and B are different" may mean "A and B are different from each other." Furthermore, the term may mean "each of A and B is different from C." Terms such as "separated," "coupled," or the like may also be interpreted similarly to "different."

Each aspect/embodiment described in the present invention may be used alone, in combination, or may be switched in accordance with the execution. Furthermore, notification of predetermined information (for example, notification of "being X") is not limited to being performed explicitly, but may be performed by implicit (for example, by giving no notification of predetermined information).

The transmitter 210 and the receiver 220 in the present invention are examples of communication units. NR is an example of a first system. NR-IoT is an example of a second system.

Although the present invention has been described above in detail, it is obvious to those skilled in the art that the present invention is not limited to the embodiments described in the present invention. The present invention may be implemented as revised and modified forms without departing from the gist and scope of the present invention as configured forth in claims. Therefore, the description of the present invention is for the purpose of illustration and does not have any restrictive meaning to the present invention.

### REFERENCE SIGNS LIST

- 10:: base station
- 110:: transmitter
- 120:: receiver
- 130:: configuration unit
- 140:: control unit
- 20:: terminal
- 210:: transmitter
- 220:: receiver
- 230:: configuration unit
- 240:: control unit
- 1001:: processor
- 1002:: storage device
- 1003:: auxiliary storage device
- 1004:: communication device
- 1005:: input device
- 1006:: output device

## Claims

1. A terminal, comprising:
a receiver configured to receive signaling for allocating a resource in a first system, from a base station;
a control unit configured to identify an invalid resource or a valid resource in a second system, based on the signaling; and
a communication unit configured to perform communication in a second system.

2. The terminal according to claim 1, wherein the control unit identifies a valid resource in the first system as an invalid resource in the second system, or identifies an invalid resource in the first system as a valid resource in the second system.

3. The terminal according to claim 2, wherein the second system uses a resource with a frequency domain that is narrower than that of the first system, and the invalid resource or the valid resource is identified by a time domain, by a frequency domain, or by a time domain and a frequency domain.

4. The terminal according to claim 3, wherein in a case where the signaling indicates periodic resource allocation, the control unit identifies the periodic resource as an invalid resource in the second system.

5. The terminal according to claim 3, wherein in a case where the signaling indicates resource allocation for repeated transmission, the control unit identifies the resource for repeated transmission as an invalid resource in the second system.

6. The terminal according to claim 3, wherein in a case where the signaling indicates resource allocation for multicast transmission, the control unit identifies the resource for multicast transmission as an invalid resource in the second system.

7. A communication method executed by a terminal, the communication method comprising:
receiving signaling for allocating a resource in a first system, from a base station;
identifying an invalid resource or a valid resource in a second system, based on the signaling; and
performing communication in a second system.
